# FASCICULE DE BREVET EUROPEEN

(11) **EP 3 671 475 B1**
(45) Date de publication et mention de la délivrance du brevet: **04.08.2021**
(21) Numéro de dépôt: 19217027.2
(22) Date de dépôt: 17.12.2019
(51) Int. Cl.: G06F 12/14

(54) **DISPOSITIF DE CONTRÔLE GÉNÉRALISÉ DES TRANSFERTS MÉMOIRES POUR LES ACCÈS CONCURRENTIELS SUR UN SYSTÈME SUR UNE PUCE**
UMFASSENDE KONTROLLVORRICHTUNG DER SPEICHERTRANSFERS FÜR KONKURRIERENDE ZUGRIFFE AUF EIN SYSTEM AUF EINEM CHIP
DEVICE FOR GENERAL CONTROL OF MEMORY TRANSFERS FOR SIMULTANEOUS ACCESS TO A SYSTEM ON A CHIP

(30) Priorité: 21.12.2018 FR 1873951
(43) Date de publication de la demande: 24.06.2020
(73) Titulaire: Thales, 92400 Courbevoie (FR)
(72) Inventeur: SALIBA, Eric, 92622 Gennevilliers Cedex (FR); BONNAFOUX, Luc, 92622 Gennevilliers Cedex (FR); BESSOU, Thomas, 75013 Paris (FR)
(74) Mandataire: Lavoix

(56) Documents cités:
- EP-A1- 1 742 152
- EP-A1- 2 808 818
- EP-A2- 1 806 674
- US-A1- 2008 163 359

## Description

La présente invention concerne un procédé de gestion d'un transfert de données. La présente invention est également relative à une architecture et à un système sur une puce comprenant l'architecture correspondant au procédé.

Le document EP 1 742 152 A1 décrit un procède et un système pour un contrôle d'accès à une mémoire.

Une architecture est une structure informatique comprenant au moins un groupe de dispositifs de traitement et au moins une mémoire. Une architecture est propre à effectuer des traitements sur des données. Lorsque les données comportent à la fois des données sensibles et non-sensibles, il est souhaitable d'obtenir des architectures respectant des contraintes de cloisonnement définissant un droit d'accès à un composant spécifique par un autre composant de l'architecture.

Pour cela, il est connu d'utiliser un MMU (acronyme de « Memory Management Unit » signifiant littéralement unité de gestion de mémoire) qui est un mécanisme faisant la correspondance entre des adresses de mémoires physiques et des adresses de mémoires virtuelles associées à des traitements d'un processeur.

Le mécanisme I/O-MMU est un mécanisme MMU particulier assurant la correspondance entre des adresses de mémoires physiques et des adresses de mémoires associées à un périphérique (i.e. des dispositifs comprenant des mémoires) comme, par exemple, un contrôleur d'interface.

De tels mécanismes permettent de contrôler les accès mémoires lors des correspondances entre adresses physiques et adresses logiques. Ce contrôle s'appuie sur l'identifiant du processus (MMU) ou du contrôleur (I/OMMU) à l'origine de la requête d'accès.

Toutefois, aucun de ces mécanismes ne permet de réaliser un contrôle d'accès lorsque le transfert de données est réalisé par un composant pour le compte d'un autre composant, comme c'est le cas lors des transferts à accès mémoire direct (ou DMA de l'anglais « Direct Memory Access ») qui sont réalisés par un contrôleur spécifique pour le compte d'un processus.

Il existe un besoin pour un procédé de gestion des transferts de données à destination et depuis des mémoires qui permette une gestion sécurisée des transferts mis en œuvre par un tiers.

Pour cela, il est proposé un procédé de gestion du transfert de données depuis ou à destination d'au moins une mémoire d'une architecture, l'architecture comprenant :
- des composants initiateurs propre à requérir le transfert de données depuis ou à destination de la mémoire,
- des mandataires, au moins l'un des mandataires étant propre à assurer le transfert de données pour le compte de l'un des composants initiateurs, et
- des pare-feu, au moins l'un des pare-feu étant un pare-feu spécifique à la mémoire, le pare-feu spécifique à la mémoire contrôlant l'accès à la mémoire,
chaque mémoire et chaque composant initiateur présentant un niveau de sécurité, l'architecture étant caractérisée par une politique de filtrage définissant des règles d'accès à la mémoire pour chaque composant initiateur et pour chaque mandataire en fonction des niveaux de sécurité,
le procédé comportant au moins une étape de :
- réception par le pare-feu spécifique à la mémoire d'au moins une requête de transfert depuis le mandataire,
- détermination par le pare-feu spécifique à la mémoire du composant initiateur de la requête de transfert, et
- autorisation de l'accès à la mémoire par le pare-feu spécifique à la mémoire uniquement lorsque les niveaux de sécurité de la mémoire et du composant initiateur de la requête de transfert respectent les règles d'accès de la politique de filtrage.

Suivant des modes de réalisation particuliers, le procédé comprend une ou plusieurs des caractéristiques suivantes, prise(s) isolément ou suivant toutes les combinaisons techniquement possibles :
- au moins l'un des mandataires est un composant actif intermédiaire, notamment un contrôleur d'accès direct à la mémoire, le composant actif intermédiaire comprenant une première connexion configurée pour échanger des données avec l'un des composants initiateurs et une deuxième connexion configurée pour échanger des données avec l'une des mémoires ;
- la requête de transfert transmise par le mandataire comporte un identifiant spécifique au composant initiateur émettant la requête de transfert ;
- l'un des pare-feu est un pare-feu spécifique au mandataire, le pare-feu spécifique au mandataire contrôlant l'accès au mandataire ;
- lors de l'étape de réception, le pare-feu spécifique au mandataire accepte, lorsqu'une transaction est en cours de réalisation par le mandataire sur la mémoire, uniquement les requêtes de transfert comportant le même identifiant du composant initiateur ;
- lors de l'étape de réception, le pare-feu spécifique au mandataire bloque l'accès au mandataire par un des composants initiateurs lorsqu'une transaction est en cours par le mandataire sur la mémoire et l'identifiant du composant initiateur diffère de l'identifiant de la transaction en cours ;
- le pare-feu spécifique au mandataire est un pare-feu à états ;
- l'identifiant du composant initiateur est associé à un niveau de priorité de traitement des requêtes de transfert par le mandataire, le pare-feu spécifique au mandataire interrompant une requête de transfert en cours sur la mémoire lorsque le pare-feu spécifique au mandataire reçoit une requête de transfert présentant un niveau de priorité supérieur ou égal à un niveau de priorité de la requête de transfert en cours ;
- des règles existent et interdisent des préemptions sur des zones de données transférées et, dans lequel le pare-feu spécifique au mandataire reçoit une nouvelle requête de transfert présentant un niveau de priorité supérieur ou égal à un niveau de priorité de la requête de transfert en cours et temporise la nouvelle requête de transfert jusqu'à la finalisation du transfert de la requête de transfert en cours sur les zones de données concernées par les règles interdisant une préemption ;
- au moins l'un des mandataires comprend une ou plusieurs mémoires volatiles, le procédé de gestion comprenant une étape d'envoi d'une commande de suppression de données enregistrées sur la ou les mémoires volatiles.

Par ailleurs, la description se rapporte aussi à une architecture propre à mettre en oeuvre un transfert de données, l'architecture comprenant :
- au moins une mémoire,
- des composants initiateurs propres à requérir le transfert de données depuis ou à destination de la mémoire,
- des mandataires, au moins l'un des mandataires étant propre à assurer le transfert de données pour le compte de l'un des composants initiateurs, et
- des pare-feu, au moins l'un des pare-feu étant un pare-feu spécifique à la mémoire, le pare-feu spécifique à la mémoire contrôlant l'accès à la mémoire, chaque mémoire et chaque composant initiateur présentant un niveau de sécurité,
l'architecture étant caractérisée par une politique de filtrage définissant des règles d'accès à la mémoire pour chaque composant initiateur et pour chaque mandataire en fonction des niveaux de sécurité,
le pare-feu spécifique à la mémoire étant configuré pour :
- recevoir au moins une requête de transfert depuis le mandataire,
- déterminer le composant initiateur de la requête de transfert, et
- autoriser l'accès à la mémoire uniquement lorsque les niveaux de sécurité de la mémoire et du composant initiateur de la requête de transfert respectent les règles d'accès de la politique de filtrage

En outre, la description se rapporte aussi à un système sur au moins une puce comprenant l'architecture comme décrit précédemment.

D'autres caractéristiques et avantages de l'invention apparaîtront à la lecture de la description qui suit de modes de réalisation de l'invention, donnée à titre d'exemple uniquement et en référence aux dessins qui sont :
- figure 1, une représentation schématique d'un exemple de système sur une puce comportant une architecture, et
- figure 2, une représentation schématique de l'architecture de la figure 1 lors d'un exemple de mise en œuvre d'un procédé de gestion.

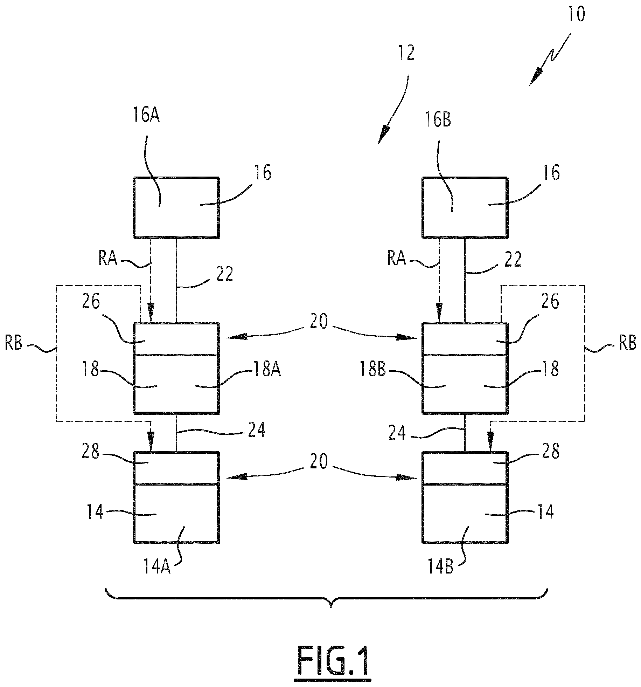

Un système 10 sur au moins une puce est illustré schématiquement sur la figure 1.

Par définition, un système sur une puce est un système dont les éléments sont embarqués sur une seule puce. Un tel système est souvent désigné sous l'acronyme Soc qui renvoie au terme anglais de « System on a Chip ».

Selon un mode de réalisation, le système 10 est agencé sur une seule puce.

Dans un autre mode de réalisation, le système 10 est réparti sur plusieurs puces configurées pour communiquer via des bus de données (non représentés).

Selon un exemple, le système 10 est reparti sur une première puce et une deuxième puce, par exemple pour contrôler des voix radio de type différentes. La première puce correspond, par exemple, à une carte numérique, et la deuxième puce correspond, par exemple, à une carte radiofréquence.

Le système 10 comporte une architecture 12.

L'architecture 12 est configurée pour mettre en œuvre au moins un transfert de données.

L'architecture 12 comporte des mémoires 14, des composants initiateurs 16, des mandataires 18 et un ensemble de pare-feu 20.

L'architecture 12 est caractérisée par une politique de filtrage définissant des règles d'accès de chaque composant à chaque autre composant en fonction de niveaux de sécurité attribués à chaque composant.

Notamment, des niveaux de sécurités sont attribués aux mémoires 14, aux composants initiateurs 16 et aux mandataires 18.

En particulier, la politique de filtrage définit les règles d'accès aux mémoires 14 et aux mandataires 18.

Une mémoire 14 est un élément propre à mémoriser des données.

Dans l'exemple de la figure 1, l'architecture 12 comprend une première mémoire 14A et une deuxième mémoire 14B.

Toutefois, ce nombre n'est qu'un simple exemple, le nombre pouvant être supérieur ou inférieur.

Dans l'exemple représenté, les mémoires 14A, 14B sont des composants distincts.

En variante, les mémoires 14A, 14B font partie du même composant. Dans ce dernier cas, chaque mémoire 14A, 14B peut être qualifiée de zone mémoire.

Selon une variante, les mémoires 14A, 14B forment une seule mémoire physique comprenant une pluralité de zones de mémoires. Chaque zone de mémoire présente notamment un niveau de sécurité particulier.

Dans l'exemple proposé, l'architecture 12 comporte deux composants initiateurs 16 mais comme pour le cas des mémoires 14, ce nombre est un simple exemple. Dans les exemples des figures, un premier composant initiateur 16A et un deuxième composant initiateur 16B sont représentés.

Chaque composant initiateur 16 est propre à requérir un transfert de données depuis ou à destination des mémoires 14.

Pour cela, chaque composant initiateur 16 émet une requête de transfert.

Une requête de transfert depuis une mémoire 14 est une opération de lecture des données mémorisées dans la mémoire 14 alors qu'une requête de transfert à destination d'une mémoire 14 est une opération d'écriture sur la mémoire 14 de données.

Selon l'exemple décrit, la requête de transfert comprend un identifiant spécifique au composant initiateur 16 qui émet la requête de transfert.

Les composants initiateurs 16 sont des cœurs d'un processeur, c'est-à-dire un ensemble de circuits capables d'exécuter des calculs de façon autonome.

Selon un exemple, le processeur est un processeur de traitement numérique ou un processeur d'interfaces. Par processeur d'interfaces, il est entendu un processeur réalisant des transferts mémoire entre une source de données disposée en interface avec le processeur d'interfaces et une mémoire. Un processeur d'interfaces est, par exemple, intégré dans une architecture configurée pour mettre en œuvre des accès direct à la mémoire (DMA), dans une architecture comprenant un enregistrement embarqué comportant une interface pour une carte mémoire multimédia (ou MMC de l'anglais « MultiMedia Card »), également appelée architecture eMMC, ou des architectures comprenant un contrôleur USB ou un circuit logique programmable (ou FPGA de l'anglais « Field-programmable gâte array »).

Selon encore un autre exemple, le processeur est un microprocesseur multi-cœurs.

Chaque composant initiateur 16 est configuré pour mettre en œuvre des processus. Un processus dans le cadre de la présente description désigne un logiciel susceptible à être exécuté sur le composant initiateur 16.

Un mandataire 18 est un élément propre à assurer des transferts de données pour le compte de l'un des composants initiateurs 16.

Selon l'exemple de la figure 1, chaque composant initiateur 16 est associé à un mandataire 18. Dans les exemples des figures, un premier mandataire 18A et un deuxième mandataire 18B sont représentés.

Le mandataire 18 est ainsi propre à recevoir une requête de transfert émise par le composant initiateur 16 et à mettre en œuvre les transferts de données requis entre des ressources mémoire 14 pour le compte du composant initiateur 16.

Selon l'exemple décrit, le mandataire 18 est un contrôleur d'accès direct à la mémoire. Un tel contrôleur est souvent désigné sous le terme de contrôleur DMA, l'acronyme DMA renvoyant au terme anglais de « Direct Memory Access ».

Un tel mandataire 18 est un composant actif au sens où le mandataire peut effectuer lui-même des requêtes ou transactions dès réception sans intervention du composant initiateur 16.

Par ailleurs, un tel mandataire 18 est un composant intermédiaire au sens où le mandataire 18 est connecté physiquement entre le composant initiateur 16 et la mémoire 14. De telles connexions sont respectivement représentées par les traits 22 et 24 sur la figure 1.

L'ensemble de pare-feu 20 comporte des pare-feu de mandataire 26 et des pare-feu de mémoire 28.

Chaque pare-feu de mandataire 26 est un pare-feu spécifique d'un mandataire 18.

Par l'expression « pare-feu spécifique au mandataire », il est entendu un pare-feu configuré pour mettre en œuvre des échanges de données bijectifs avec le mandataire respectif. Cela signifie que le pare-feu spécifique au mandataire est configuré pour contrôler l'accès au mandataire respectif uniquement, c'est-à-dire que ledit pare-feu spécifique au mandataire ne contrôle pas l'accès à d'autres mandataires.

Chaque pare-feu de mandataire 26 est propre à contrôler les requêtes de transfert en provenance des composants initiateurs 16 vers le mandataire 18, appelées requêtes amont RA, et les transferts de données réalisées par le mandataire 18 sur les ressources mémoire 14 pour le compte du composant initiateur 16, appelées requêtes aval RB. Les requêtes aval sont par exemple contrôlés par le pare-feu de mandataire 26 et/ou par le pare-feu de mémoire 28.

Selon l'exemple décrit, chaque pare-feu de mandataire 26 est un pare-feu à états.

Aussi, dans la suite, chaque pare-feu de mandataire 26 est dénommé pare-feu à états 26.

Par « pare-feu à états », il est entendu un pare-feu propre à effectuer un filtrage selon une machine à états mettant en œuvre une pluralité d'étapes selon des règles d'accès qui prennent en compte certaines conditions d'état du pare-feu à états. Par exemple, les règles d'accès sont modifiées lorsque des conditions d'état du pare-feu à états évoluent, comme décrit ci-dessous lors du fonctionnement du pare-feu à états. Selon l'exemple proposé, les règles d'accès du pare-feu à états sont au moins en partie celles de la politique de filtrage.

Chaque pare-feu de mémoire 28 est un pare-feu spécifique d'une mémoire 14.

Par l'expression « pare-feu spécifique à la mémoire », il est entendu un pare-feu configuré pour mettre en œuvre des échanges de données bijectifs avec la mémoire respective. Ceci signifie que le pare-feu spécifique à la mémoire est configuré pour mettre en œuvre des échanges de données uniquement avec la mémoire 14 respective mais n'échange pas de données avec d'autres mémoires.

Chaque pare-feu de mémoire 28 est propre à contrôler l'accès à la mémoire 14 pour laquelle il est spécifique.

Selon l'exemple décrit, chaque pare-feu de mémoire 28 est un pare-feu statique.

Aussi, dans la suite, chaque pare-feu de mémoire 28 est dénommé pare-feu statique 28.

Par « pare-feu statique », il est entendu un pare-feu propre à effectuer un filtrage selon des règles invariantes.

Selon l'exemple proposé, les règles d'accès du pare-feu statique sont au moins en partie celles de la politique de filtrage.

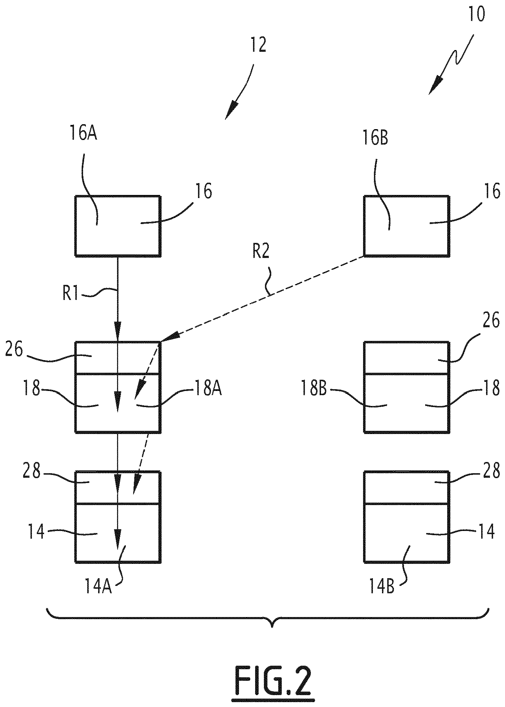

Le fonctionnement de l'architecture 12 est maintenant décrit en référence à une figure 2 illustrant schématiquement un exemple de mise en œuvre d'un procédé de gestion d'un transfert de données depuis et à destination d'une mémoire 14.

Le procédé de gestion comporte une étape d'initialisation, une étape de réception et d'autorisation de requêtes de transfert amont en état initialisé, une étape de marquage et d'émission de requêtes de transfert aval et une étape de réception de requêtes de transfert aval.

Lors de l'étape d'initialisation, l'ensemble des pare-feu 20 est alimenté électriquement.

Avant alimentation, chaque pare-feu 20 bloque toutes les requêtes et après alimentation, chaque pare-feu 20 bloque toutes les requêtes tant que les règles d'accès pertinentes pour le pare-feu 20 considéré ne sont pas connues par chaque pare-feu 20.

L'étape d'initialisation comporte alors l'insertion des règles d'accès pertinentes dans chaque pare-feu 20.

Lors de l'étape de réception et d'autorisation de requêtes de transfert amont en état initialisé, il est supposé que le premier composant initiateur 16a émet une première requête R1 de transfert de données mémorisées dans la première mémoire 14A et que le deuxième composant initiateur 16B émet une deuxième requête R2 de transfert de données mémorisées dans la même première mémoire 14A.

Notamment, lors de l'étape de réception et d'autorisation de requêtes de transfert amont en état initialisé, le premier pare-feu à états 26 reçoit la première requête R1 et la deuxième requête R2.

Le pare-feu à états 26 détermine l'identifiant du premier composant initiateur 16A contenu dans la première requête R1 ainsi que l'identifiant du deuxième composant initiateur 16B contenu dans la deuxième requête R2.

Le pare-feu à états 26 autorise l'accès au médiateur 18 uniquement si les niveaux du composant initiateur 16 ayant émis la requête et celui du premier médiateur 18 sont conformes à la politique de filtrage.

Plus précisément, le pare-feu à états 26 contrôle alors si le premier composant initiateur 16A a le droit d'accès au premier mandataire 18 d'après les règles d'accès de la politique de filtrage. Le premier pare-feu à états 26 contrôle similairement le droit d'accès au mandataire 18 par le deuxième composant initiateur 16B.

Lorsque le composant initiateur 16A ou 16B n'a pas le niveau de sécurité requis selon la politique de filtrage, le premier pare-feu à états 26 rejette la requête émise par ledit composant initiateur 16.

Dans l'exemple proposé, il est supposé que les deux requêtes R1 et R2 sont acceptées par le premier pare-feu à états 26.

Lors de l'étape de réception et d'autorisation de requêtes de transfert amont en état initialisé, le mandataire 18 traite, selon un exemple particulier, la requête R1 ou R2 ayant le plus haut niveau de priorité.

Lors de l'étape de marquage des requêtes de transfert aval, le mandataire 18 réalise le marquage des requêtes de transfert à destination de la première mémoire 14 avec l'identifiant du composant initiateur 16 dont la requête a le plus haut niveau de priorité. Ainsi, toutes les requêtes de transfert en provenance du mandataire 18 pour le compte du composant initiateur 16 contiennent l'identifiant du composant initiateur 16 autorisé et ayant le plus haut niveau de priorité.

Lors de l'étape de réception de requête aval, le premier pare-feu statique 28 reçoit la requête R1 ou R2 ayant le niveau de priorité le plus élevé.

Lors de l'étape de réception de requête de transfert aval, pour chaque transaction, le deuxième pare-feu 28 détermine le composant initiateur 16 de la requête R1 ou R2 en obtenant l'identifiant contenu dans chaque requête R1 ou R2 par échanges avec le mandataire 18. Par exemple, le composant initiateur 16 de la requête R1 ou R2 est le premier composant initiateur 16A ou le deuxième composant initiateur 16B.

Lors de l'étape de réception de requête de transfert aval, le premier pare-feu statique 28 autorise l'accès à la première mémoire 14 lorsque les niveaux de sécurité de la première mémoire 14 et du composant initiateur 16 de la requête R1 ou R2 respectent les règles d'accès de la politique de filtrage.

En l'espèce, il est supposé que seul le premier composant initiateur 16A a le niveau requis par la politique.

Dans une telle hypothèse, la deuxième requête R2 est rejetée par le premier pare-feu statique 28 alors que la première requête R1 est acceptée par le premier pare-feu statique 28.

Le transfert de données sur la première mémoire 14A pour le compte du premier composant initiateur 16A est alors effectué conformément à la première requête R1.

Le procédé de gestion de transfert permet ainsi de gérer une politique de filtrage à l'aide d'une combinaison de pare-feu à états 26 et de pare-feu statique 28 d'une manière très efficace et plus précise.

En effet, le procédé de gestion rend impossible qu'un composant initiateur 16 utilise un mandataire 18 pour contourner frauduleusement la politique de contrôle d'accès à la mémoire 14 pour laquelle le composant n'a pas le droit d'accès associé.

Par ailleurs, il suffit de modifier les règles d'accès insérées dans les pare-feu pour adapter le procédé de gestion à une nouvelle politique de filtrage. Le procédé de filtrage est donc aisément reconfigurable.

Le procédé permet une gestion de bout-en-bout des flux dans le système 10 ainsi que des accès concurrents à un composant du système 10.

Le procédé permet, en outre, d'établir une politique de filtrage homogène et cohérente sur l'ensemble du système 10 de manière statique et dynamique.

Ainsi, le procédé de gestion permet, en outre, d'éviter un accès simultané de plusieurs requêtes de transfert à la mémoire 14, si cela est spécifié dans politique de filtrage, comme décrit selon un mode de réalisation particulier ci-après.

Selon un mode de réalisation particulier, le pare-feu à états 26 vérifie également si une transaction est en cours de réalisation par le mandataire 18 avec la mémoire 14. Notamment, lorsqu'une transaction est en cours de réalisation par le mandataire 18 avec mémoire 14, le pare-feu à états 26 accepte uniquement les requêtes de transfert comportant l'identifiant du composant initiateur 16 de la requête en cours de réalisation. Des autres requêtes sont bloquées.

Selon un autre mode de réalisation, si l'identifiant du composant initiateur 16 est associé à un niveau de priorité de traitement des requêtes par le mandataire 18, le pare-feu à états 26 interrompt le traitement de la requête en cours lorsque le pare-feu à états 26 reçoit une requête de transfert présentant un niveau de priorité supérieur ou égal au niveau de priorité de la requête de transfert en cours de traitement.

Le pare-feu à états 26 interrompt le transfert en cours et mémorise l'état en cours du transfert. Le pare-feu 26 traite alors une nouvelle requête comme décrit notamment dans l'étape de réception et d'autorisation de requêtes de transfert amont en état initialisé.

Une fois le transfert correspondant à la nouvelle requête finalisé, le pare-feu 26 reprend le traitement de la requête interrompu à partir de l'état mémorisé.

Selon un mode de réalisation particulier, le pare-feu à états 26 vérifie la nouvelle requête de transfert et la requête de transfert en cours partagent des zones de données transférées et si des règles particulières de transfert sont définies sur les données transférées.

Si des règles existent et interdisent des préemptions sur des zones de données transférées, la nouvelle requête de transfert est temporisée jusqu'à la finalisation du transfert de la requête de transfert en cours sur les zones de données concernées, par lesdites règles, et cela même si la nouvelle requête de transfert présente un niveau de priorité supérieur ou égal à un niveau de priorité de la requête de transfert en cours.

Avantageusement, le procédé de gestion comprend, en outre, une étape d'envoi d'une commande de suppression de données enregistrées dans une ou plusieurs mémoires volatiles du mandataire 18. Cela permet de garantir l'absence de fuite de données via la réutilisation de segments de mémoires mal dé-alloués lors d'un changement de contexte d'exécution. Ainsi, il apparaît que dans une version élaborée, le procédé permet d'assurer la mise en œuvre d'une politique de filtrage respectant trois règles. Selon la première règle, l'accès à un composant est limité à un instant donné à un seul processus ou groupe de processus autorisés. Selon la deuxième règle, si un composant entreprend des transactions avec d'autres composants à la suite de la requête d'un processus, ces requêtes sont marquées comme appartenant au processus initiateur. Enfin, selon la troisième règle, la politique de filtrage appliquée pour chaque composant est homogène sur l'ensemble du système.

## Revendications

1. Procédé de gestion du transfert de données depuis ou à destination d'au moins une mémoire (14) d'une architecture (12), l'architecture (12) comprenant :
- des composants initiateurs (16) propres à requérir le transfert de données depuis ou à destination de la mémoire (14),
- des mandataires (18), au moins l'un des mandataires (18) étant propre à assurer le transfert de données pour le compte de l'un des composants initiateurs (16), et
- des pare-feu (20), au moins l'un des pare-feu (20) étant un pare-feu (20) spécifique à la mémoire (14), le pare-feu (20) spécifique à la mémoire (14) contrôlant l'accès à la mémoire (14),
chaque mémoire (14) et chaque composant initiateur (16) présentant un niveau de sécurité, l'architecture (12) étant **caractérisée par** une politique de filtrage définissant des règles d'accès à la mémoire (14) pour chaque composant initiateur (16) et pour chaque mandataire (18) en fonction des niveaux de sécurité,
le procédé comportant au moins une étape de :
- réception par le pare-feu (20) spécifique à la mémoire (14) d'au moins une requête de transfert depuis le mandataire (18), le procédé étant **caractérisé en ce qu'**il comprend les étapes de
- détermination par le pare-feu (20) spécifique à la mémoire (14) du composant initiateur (16) de la requête de transfert, et
- autorisation de l'accès à la mémoire (14) par le pare-feu (20) spécifique à la mémoire (14) uniquement lorsque les niveaux de sécurité de la mémoire (14) et du composant initiateur (16) de la requête de transfert respectent les règles d'accès de la politique de filtrage.

2. Procédé de gestion selon la revendication 1, dans lequel au moins l'un des mandataires (18) est un composant actif intermédiaire, notamment un contrôleur d'accès direct à la mémoire (14), le composant actif intermédiaire comprenant une première connexion (22) configurée pour échanger des données avec l'un des composants initiateurs (14) et une deuxième connexion (24) configurée pour échanger des données avec l'une des mémoires (14).

3. Procédé de gestion selon la revendication les 1 ou la revendication 2, dans lequel la requête de transfert transmise par le mandataire (18) comporte un identifiant spécifique au composant initiateur (16) émettant la requête de transfert.

4. Procédé de gestion selon la revendication 3, dans lequel l'un des pare-feu (20) est un pare-feu (20) spécifique au mandataire (18), le pare-feu (20) spécifique au mandataire (18) contrôlant l'accès au mandataire (18).

5. Procédé de gestion selon la revendication 4, dans lequel, lors de l'étape de réception, le pare-feu spécifique au mandataire (18) accepte, lorsqu'une transaction est en cours de réalisation par le mandataire (18) sur la mémoire (14), uniquement les requêtes de transfert comportant le même identifiant du composant initiateur (16).

6. Procédé de gestion selon la revendication 4 ou 5, dans lequel, lors de l'étape de réception, le pare-feu (20) spécifique au mandataire (18) bloque l'accès au mandataire (18) par un des composants initiateurs (16) lorsqu'une transaction est en cours par le mandataire (18) sur la mémoire (14) et l'identifiant du composant initiateur (16) diffère de l'identifiant de la transaction en cours.

7. Procédé de gestion selon l'une quelconque des revendications 4 à 6, dans lequel le pare-feu (20) spécifique au mandataire (18) est un pare-feu à états (26).

8. Procédé de gestion selon l'une quelconque des revendications 4 à 7, dans lequel l'identifiant du composant initiateur (16) est associé à un niveau de priorité de traitement des requêtes de transfert par le mandataire (18), le pare-feu (20) spécifique au mandataire (18) interrompant une requête de transfert en cours sur la mémoire (14) lorsque le pare-feu (20) spécifique au mandataire (18) reçoit une requête de transfert présentant un niveau de priorité supérieur ou égal à un niveau de priorité de la requête de transfert en cours.

9. Procédé de gestion selon la revendication 8, dans lequel des règles existent et interdisent des préemptions sur des zones de données transférées et, dans lequel le pare-feu (20) spécifique au mandataire (18) reçoit une nouvelle requête de transfert présentant un niveau de priorité supérieur ou égal à un niveau de priorité de la requête de transfert en cours et temporise la nouvelle requête de transfert jusqu'à la finalisation du transfert de la requête de transfert en cours sur les zones de données concernées par les règles interdisant une préemption.

10. Procédé de gestion selon l'une quelconque des revendications 1 à 7, dans lequel au moins l'un des mandataires (18) comprend une ou plusieurs mémoires volatiles, le procédé de gestion comprenant une étape d'envoi d'une commande de suppression de données enregistrées sur la ou les mémoires volatiles.

11. Architecture (12) propre à mettre en œuvre un transfert de données, l'architecture (12) comprenant :
- au moins une mémoire (14),
- des composants initiateurs (16) propres à requérir le transfert de données depuis ou à destination de la mémoire (14),
- des mandataires (18), au moins l'un des mandataires (18) étant propre à assurer le transfert de données pour le compte de l'un des composants initiateurs (16), et
- des pare-feu (20), au moins l'un des pare-feu (20) étant un pare-feu (20) spécifique à la mémoire (14), le pare-feu (20) spécifique à la mémoire (14) contrôlant l'accès à la mémoire (14), chaque mémoire (14) et chaque composant initiateur (16) présentant un niveau de sécurité,
l'architecture (12) étant **caractérisée par** une politique de filtrage définissant des règles d'accès à la mémoire (14) pour chaque composant initiateur (16) et pour chaque mandataire (18) en fonction des niveaux de sécurité,
le pare-feu (20) spécifique à la mémoire (14) étant configuré pour :
- recevoir au moins une requête de transfert depuis le mandataire (18),
- déterminer le composant initiateur (16) de la requête de transfert, et
- autoriser l'accès à la mémoire (14) uniquement lorsque les niveaux de sécurité de la mémoire (14) et du composant initiateur (16) de la requête de transfert respectent les règles d'accès de la politique de filtrage.

12. Système sur au moins une puce (10) comprenant l'architecture (12) selon la revendication 11.

## Patentansprüche

1. Verfahren zum Verwalten der Übertragung von Daten von oder zu mindestens einem Speicher (14) einer Architektur (12), wobei die Architektur (12) umfasst:
- Initiatorkomponenten (16), die geeignet sind, die Übertragung von Daten vom oder zum Speicher (14) zu verlangen,
- Beauftragte (18), wobei mindestens einer der Beauftragten (18) geeignet ist, die Datenübertragung im Auftrag einer der Initiatorkomponenten (16) durchzuführen, und
- Firewalls (20), wobei mindestens eine der Firewalls (20) eine für den Speicher (14) spezifische Firewall (20) ist und die für den Speicher (14) spezifische Firewall (20) den Zugriff auf den Speicher (14) steuert,
wobei jeder Speicher (14) und jede Initiatorkomponente (16) eine Sicherheitsstufe aufweist, wobei die Architektur (12) durch eine Filterrichtlinie gekennzeichnet ist, die Regeln für den Zugriff auf den Speicher (14) für jede Initiatorkomponente (16) und für jeden Beauftragten (18) gemäß den Sicherheitsstufen definiert,
wobei das Verfahren mindestens einen Schritt des:
- Empfangens mindestens einer Übertragungsanfrage von dem Beauftragten (18) durch die für den Speicher (14) spezifische Firewall (20) aufweist, wobei das Verfahren **dadurch gekennzeichnet ist, dass** es die folgenden Schritte umfasst:
- Bestimmen der Übertragungsanfrage durch die für den Speicher (14) spezifische Firewall (20) der Initiatorkomponente (16), und
- Erlauben des Zugriffs auf den Speicher (14) durch die für den Speicher (14) spezifische Firewall (20) nur dann, wenn die Sicherheitsstufen des Speichers (14) und der Initiatorkomponente (16) der Übertragungsanfrage den Zugriffsregeln der Filterrichtlinie entsprechen.

2. Verwaltungsverfahren nach Anspruch 1, bei dem mindestens einer der Beauftragten (18) eine aktive Zwischenkomponente, insbesondere eine Steuervorrichtung für den direkten Zugriff auf den Speicher (14) ist, wobei die aktive Zwischenkomponente eine erste Verbindung (22), die für den Austausch von Daten mit einer der Initiatorkomponenten (14) ausgebildet ist, und eine zweite Verbindung (24), die für den Austausch von Daten mit einem der Speicher (14) ausgebildet ist, umfasst.

3. Verwaltungsverfahren nach Anspruch 1 oder Anspruch 2, bei dem die vom Beauftragten (18) übertragene Übertragungsanfrage eine Kennung aufweist, die für die Initiatorkomponente (16), die die Übertragungsanfrage ausgibt, spezifisch ist.

4. Verwaltungsverfahren nach Anspruch 3, bei dem eine der Firewalls (20) eine für den Beauftragten (18) spezifische Firewall (20) ist, wobei die für den Beauftragten (18) spezifische Firewall (20) den Zugriff auf den Beauftragten (18) steuert.

5. Verwaltungsverfahren nach Anspruch 4, bei dem beim Empfangsschritt die für den Beauftragten (18) spezifische Firewall, wenn eine Transaktion durch den Bauftragten (18) auf dem Speicher (14) durchgeführt wird, nur Übertragungsanfragen annimmt, die dasselbe Kennzeichen der Initiatorkomponente (16) aufweisen.

6. Verwaltungsverfahren nach Anspruch 4 oder 5, bei dem beim Empfangsschritt die für den Beauftragten(18) spezifische Firewall (20) den Zugriff auf den Beauftragten (18) durch eine der Initiatorkomponenten (16) blockiert, wenn eine Transaktion durch den Beauftragten (18) auf dem Speicher (14) durchgeführt wird und die Kennung der Initiatorkomponente (16) sich von der Kennung der laufenden Transaktion unterscheidet.

7. Verwaltungsverfahren nach einem der Ansprüche 4 bis 6, bei dem die für den Beauftragten (18) spezifische Firewall (20) eine Stateful-Inspection-Firewall (26) ist.

8. Verwaltungsverfahren nach einem der Ansprüche 4 bis 7, bei dem die Kennung der Initiatorkomponente (16) einer Prioritätsstufe der Verarbeitung der Übertragungsanfragen durch den Beauftragten (18) zugeordnet ist, wobei die für den Beauftragten (18) spezifische Firewall (20) eine laufende Übertragungsanfrage an den Speicher (14) unterbricht, wenn die für den Beauftragten (18) spezifische Firewall (20) eine Übertragungsanfrage mit einer Prioritätsstufe empfängt, die gleich oder größer ist als eine Prioritätsstufe der laufenden Übertragungsanfrage.

9. Verwaltungsverfahren nach Anspruch 8, bei dem Regeln vorhanden sind und Bevorrechtigungen auf übertragene Datenbereiche verbieten und bei dem die für den Beauftragten (18) spezifische Firewall (20) eine neue Übertragungsanfrage mit einer Prioritätsstufe empfängt, die größer oder gleich einer Prioritätsstufe der laufenden Übertragungsanfrage aufweist, und die neue Übertragungsanfrage bis zum Abschluss der Übertragung der laufenden Übertragungsanfrage auf die Datenbereiche verzögert, die von den eine Bevorrechtigung verbietenden Regeln betroffen sind.

10. Verwaltungsverfahren nach einem beliebigen der Ansprüche 1 bis 7, bei dem mindestens einer der Beauftragten (18) einen oder mehrere flüchtige Speicher umfasst, wobei das Verwaltungsverfahren einen Schritt des Sendens eines Befehls zum Löschen von in dem oder den flüchtigen Speichern gespeicherten Daten umfasst.

11. Architektur (12), die zum Durchführen einer Datenübertragung geeignet ist, wobei die Architektur (12) umfasst:
- mindestens einen Speicher (14),
- Initiatorkomponenten (16), die geeignet sind, die Übertragung von Daten vom oder zum Speicher (14) zu verlangen,
- Beauftragte (18), wobei mindestens einer der Beauftragten (18) geeignet ist, die Datenübertragung im Auftrag einer der Initiatorkomponenten (16) durchzuführen, und
- Firewalls (20), wobei mindestens eine der Firewalls (20) eine für den Speicher (14) spezifische Firewall (20) ist und die für den Speicher (14) spezifische Firewall (20) den Zugriff auf den Speicher (14) steuert, wobei jeder Speicher (14) und jede Initiatorkomponente (16) eine Sicherheitsstufe aufweist,
wobei die Architektur (12) durch eine Filterrichtlinie gekennzeichnet ist, die Zugriffsregeln auf den Speicher (14) für jede Initiatorkomponente (16) und für jeden Benutzer (18) in Abhängigkeit von Sicherheitsstufen definiert, wobei die für den Speicher (14) spezifische Firewall (20) ausgebildet ist:
- mindestens eine Übertragungsanfrage vom Benutzer (18) zu empfangen,
- die Initiatorkomponente (16) der Übertragungsanfrage zu bestimmen und
- den Zugriff auf den Speicher (14) nur dann zu erlauben, wenn die Sicherheitsstufen des Speichers (14) und der Initiatorkomponente (16) der Übertragungsanfrage den Zugriffsregeln der Filterrichtlinie entsprechen.

12. System auf mindestens einem Chip (10), das die Architektur (12) von Anspruch 11 umfasst.

## Claims

1. A data transfer management method for managing the transfer of data from or to at least one memory storage unit (14) of an architecture (12), the architecture (12) comprising:
- request initiator components (16) that are capable of requesting the transfer of data from or on to the memory storage unit (14);
- proxies (18), at least one of the proxies (18) being capable of ensuring the transfer of data on account of one of the request initiator components (16); and
- firewalls (20), at least one of the firewalls (20) being a firewall (20) that is specific to the memory unit (14), the memory (14) specific firewall (20) controlling the access to the memory (14);
each memory unit (14) and each request initiator component (16) having a security level, the architecture (12) being **characterised by** a filtering policy that defines the rules of access to the memory unit (14) for each request initiator component (16) and for each proxy (18) on the basis of the security levels;
the method comprising at least one step of:
- reception by the firewall (20) specific to the memory (14) of at least one data transfer request from the proxy (18),
the method being **characterized in that** it comprises the steps of
- determination by the memory (14) specific firewall (20) of the initiator component (16) that is initiating the data transfer request; and
- authorisation of the accessing of the memory (14) by the memory (14) specific firewall (20) only when the security levels of the memory (14) and initiator component (16) that is initiating the data transfer request are in compliance with the access rules of the filtering policy.

2. A data transfer management method according to claim 1, wherein at least one of the proxies (18) is an intermediate active component, in particular a direct memory access controller (14), the intermediate active component comprising a first connection (22) configured so as to exchange data with one of the request initiator components (14) and a second connection (24) configured so as to exchange data with one of the memory units (14).

3. A data transfer management method according to claim 1 or claim 2, wherein the data transfer request transmitted by the proxy (18) includes a unique identifier specific to the request initiator component (16) that is sending the data transfer request.

4. A data transfer management method according to claim 3, wherein one of the firewalls (20) is a firewall (20) that is specific to the proxy (18), with the proxy (18) specific firewall (20) controlling access to the proxy (18).

5. A data transfer management method according to claim 4, wherein, during the data transfer request reception step, the proxy (18) specific firewall accepts, when a transaction is in the course of being performed by the proxy (18) on the memory (14), only those data transfer requests that include the same identifier as that of the request initiator component (16).

6. A data transfer management method according to claim 4 or 5, wherein, during the data transfer request reception step, the proxy (18) specific firewall blocks the accessing of the proxy (18) by one of the request initiator components (16) when a transaction is in the course of being performed by the proxy (18) on the memory (14), and the identifier of the initiator component (16) differs from the identifier of the transaction currently in progress.

7. A data transfer management method according to any one of claims 4 to 6, wherein the proxy (18) specific firewall (20) is a stateful firewall (26).

8. A data transfer management method according to any one of claims 4 to 7, wherein the identifier of the request initiator component (16) is associated with a processing priority level for processing of the data transfer requests by the proxy (18), with the proxy-specific firewall (20) interrupting a data transfer request currently in progress on the memory (14) when the proxy-specific firewall (20) receives a data transfer request which has a priority level that is greater than or equal to the priority level of the data transfer request currently in progress.

9. A data transfer management method according to claim 8, wherein there are existing rules that prohibit preemptions on transferred data areas and, in which the proxy (18) specific firewall receives a new data transfer request having a priority level that is greater than or equal to the priority level of the data transfer request currently in progress, and delays the new data transfer request until the completion of the transfer related to the data transfer request currently in progress on the data areas affected by the rules prohibiting a preemption.

10. A data transfer management method according to any one of claims 1 to 7, wherein at least one of the proxies (18) comprises one or more volatile memory unit(s), the data transfer management method including a command sending step for sending a deletion command for deleting data recorded on the one or more volatile memory unit(s).

11. An architecture (12) that is capable of operationally implementing a data transfer, the architecture (12) comprising:
- at least one memory storage unit (14);
- request initiator components (16) that are capable of requesting the transfer of data from or on to the memory unit (14);
- proxies (18), at least one of the proxies (18) being capable of ensuring the transfer of data on account of one of the request initiator components (16); and
- firewalls (20), at least one of the firewalls (20) being a firewall (20) that is specific to the memory unit (14), the memory (14) specific firewall (20) controlling the access to the memory (14), each memory unit (14) and each request initiator component (16) having a security level;
the architecture (12) being **characterised by** a filtering policy that defines the rules of access to the memory unit (14) for each request initiator component (16) and for each proxy (18) on the basis of the security levels;
the memory (14) specific firewall (20) configured so as to:
- receive at least one data transfer request from the proxy (18);
- determine the initiator component (16) that is initiating the data transfer request; and
- authorise the accessing of the memory (14) only when the security levels of the memory (14) and the initiator component (16) that is initiating the data transfer request are in compliance with the access rules of the filtering policy.

12. A system on at least one chip (10) that comprises the architecture (12) according to claim 11.
